# EUROPEAN PATENT APPLICATION

(11) **EP 4 647 859 A1**
(43) Date of publication of application: **12.11.2025**
(21) Application number: 25169600.1
(22) Date of filing: 10.04.2025
(51) Int. Cl.: G05B 23/02, G01M 15/00, H04Q 9/04

(54) **ENGINE HEALTH MONITORING**

(30) Priority: 10.05.2024 GB 202406533
(71) Applicant: Rolls-Royce plc, London N1 9FX (GB)
(72) Inventor: Mills, Andrew R, Derby, DE24 8BJ (GB); Hills, Andrew F, Derby, DE24 8BJ (GB); Sekaran, Paulas R, Derby, DE24 8BJ (GB); Naylor, Philip H, Derby, DE24 8BJ (GB)
(74) Representative: Rolls-Royce plc

(57) **Abstract**

The disclosure relates to synchronising measurement data for engine health monitoring when using more than one engine health monitoring system. Example embodiments include a method of synchronising sensor data from first and second engine health monitoring, EHM, systems (11, 12) installed on an engine (10), each EHM system (11, 12) having a plurality of sensors (202a-c) configured to measure parameters of the engine (10), the method comprising: acquiring first and second sensor data from the plurality of sensors (202a-c) at the first and second EHM systems (11, 12); logging the first sensor data against a first time signal from the first EHM systems and the second sensor data against a second time signal from the second EHM system; acquiring a side channel signal (316) from a side channel sensor (306) mounted to a cable or connector (305) connected to the first EHM system (11); deriving a timing signal (323) from the side channel signal (316); determining a timing difference between the first and second time signals from the derived timing signal; and adjusting the second time signal for the second sensor data to align the second sensor data in time with the first sensor data.

## Description

### TECHNICAL FIELD

The disclosure relates to synchronising measurement data for engine health monitoring when using more than one engine health monitoring system.

### BACKGROUND

Engine Health Monitoring (EHM) data is routinely used for gas turbine engines in service on aircraft. EHM data can reduce the need for unplanned maintenance by constantly monitoring engine parameters for detecting, and potentially resolving, certain types of issues before any disruption occurs, thereby enabling an engine to be kept safely in use. Permanent on-engine EHM equipment, including sensors and related data acquisition and processing equipment, adds weight and cost to an engine's bill of materials. Monitoring of certain types of parameters can be less necessary for more reliable engine components. Monitoring as many parameters as possible is therefore not typically proportionate or useful, as there are limits to how much EHM equipment can sensibly be fitted to every engine at new build. This means that, for certain emergent engine problems, there is a risk of having no relevant service flight data to help resolve the problem. Temporary fit sensing and data acquisition equipment, known as troubleshooting kits (or TSKs), offer the prospect of providing an additional agile EHM capability in the event of emergent service issues, without adding new build engine cost and weight. Such TSKs can be configured and installed to monitor additional engine parameters that are not monitored by a permanently installed EHM system.

A problem with data acquisition using a TSK is a lack of context for the acquired data. Information that is collected by a sensor needs to be linked to what the engine was doing at the time. Some way of synchronising measured data from a permanently installed EHM system and additional data from a TSK is therefore necessary. It may, however, not be possible or feasible to obtain a reliable common time stamp to synchronise data from a permanent EHM system with supplementary data from a TSK, resulting in data being possibly unsynchronised and therefore either less useful or potentially misleading.

### SUMMARY

According to a first aspect there is provided a method of synchronising sensor data from first and second engine health monitoring, EHM, systems installed on an engine, each EHM system having a plurality of sensors configured to measure parameters of the engine, the method comprising:
acquiring first and second sensor data from the plurality of sensors at the first and second EHM systems;
logging the first sensor data against a first time signal from the first EHM systems and the second sensor data against a second time signal from the second EHM system;
acquiring a side channel signal from a side channel sensor mounted to a cable or connector connected to the first EHM system;
deriving a timing signal from the side channel signal;
determining a timing difference between the first and second time signals from the derived timing signal; and
adjusting the second time signal for the second sensor data to align the second sensor data in time with the first sensor data.

The side channel sensor may be mounted around the cable connected to the first EHM system.

The side channel sensor may be connected to the cable through an outer sheath of the cable connected to the first EHM system.

The timing signal may be derived by extracting features from the side channel signal.

The second time signal may be adjusted to apply an offset to the second time signal to align the second sensor data with the first sensor data.

The second time signal may be adjusted to apply a time dilation to the second time signal to align the second sensor data with the first sensor data.

The first EHM system may be permanently mounted to the engine and the second EHM system temporarily mounted to the engine.

The first and second sensor data may include one or more of pressure, temperature and engine speed data from the engine.

According to a second aspect there is provided a system for monitoring an engine, the system comprising first and second engine health monitoring, EHM, systems installed on an engine, each EHM system having a plurality of sensors configured to measure parameters of the engine, the system configured to:
acquire first and second sensor data from the plurality of sensors at the first and second EHM systems;
log the first sensor data against a first time signal from the first EHM systems and the second sensor data against a second time signal from the second EHM system;
acquire a side channel signal from a side channel sensor mounted to a cable or connector connected to the first EHM system;
derive a timing signal from the side channel signal;
determine a timing difference between the first and second time signals from the derived timing signal; and
adjust the second time signal for the second sensor data to align the second sensor data in time with the first sensor data.

The side channel sensor may be mounted around the cable connected to the first EHM system.

The side channel sensor may be connected to the cable through an outer sheath of the cable connected to the first EHM system.

The timing signal may be derived by extracting features from the side channel signal.

The system may be configured to adjust the second time signal to apply an offset to the second time signal to align the second sensor data with the first sensor data.

The system may be configured to adjust the second time signal to apply a time dilation to the second time signal to align the second sensor data with the first sensor data.

The first EHM system may be permanently mounted to the engine and the second EHM system temporarily mounted to the engine.

The first and second sensor data may include one or more of pressure, temperature and engine speed data from the engine.

According to a third aspect there is provided a gas turbine engine comprising a system for monitoring the engine according to the second aspect.

According to a fourth aspect there is provided a computer program comprising instructions for causing a computer-implemented system for monitoring an engine to perform the method according to the first aspect.

According to a fifth aspect there is provided a non-transitory computer readable storage medium comprising computer readable instructions that, when read by a computer-implemented system for monitoring an engine, cause performance of the method according to the first aspect.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION OF THE DRAWINGS

Embodiments will now be described by way of example only with reference to the accompanying drawings, which are purely schematic and not to scale, and in which:
**Figure 1** is a schematic sectional diagram of a conventional gas turbine engine;
**Figure 2** is a schematic block diagram illustrating an example EHM system for the engine of Figure 1;
**Figure 3** is a schematic diagram illustrating functions relating to synchronising sensor data from first and second EHM systems;
**Figure 4** is a schematic diagram of an example side channel sensor mounted to a cable or connector;
**Figure 5** is an illustration of an example acquired side channel signal and a corresponding digital signal; and
**Figure 6** is a schematic flow diagram illustrating an example method of synchronising sensor data.

### DETAILED DESCRIPTION

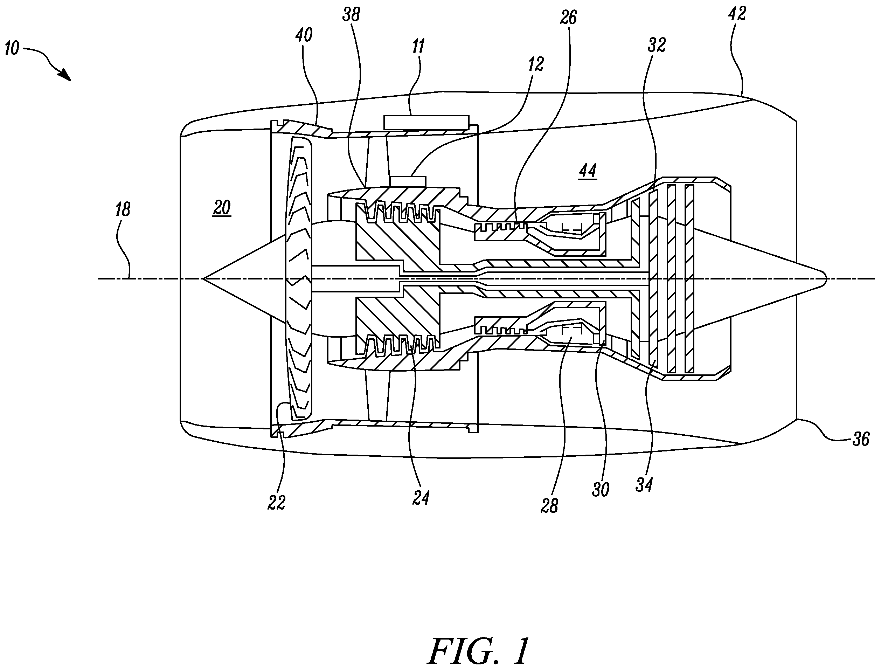

Figure 1 illustrated in schematic cross-section an example conventional gas turbine engine 10 on which first and second EHM systems 11, 12 are installed. The gas turbine engine 10 has a principal and rotational axis 18 and comprises, in axial flow series, an air intake 20, a propulsive fan 22, an intermediate pressure compressor 24, a high-pressure compressor 26, combustion equipment 28, a high-pressure turbine 30, an intermediate pressure turbine 32, a low-pressure turbine 34 and an exhaust nozzle 36.

The gas turbine engine 10 also includes a core casing 38 and a low-pressure compressor casing 40. The core casing 38 surrounds the intermediate pressure compressor 24, the high-pressure compressor 26, the combustion equipment 28, the high-pressure turbine 30, the intermediate pressure turbine 32 and the low-pressure turbine 34. The core casing 38 may be modular (that is, comprise several casing segments that connect to one another via fasteners to provide the core casing 38), or may be continuous and unitary. The low-pressure compressor casing 40 surrounds the fan 22, the low-pressure compressor 24 and at least a portion of the core casing 38. A nacelle 42 generally surrounds the engine 10 and defines both the intake 20 and the exhaust nozzle 36.

The gas turbine engine 10 operates so that air entering the intake 20 is accelerated by the fan 22 to produce two air flows: a first air flow into the intermediate pressure compressor 24 and a second air flow which passes through a bypass duct 44. The intermediate pressure compressor 24 compresses the air flow directed into it before delivering that air to the high-pressure compressor 26 where further compression takes place.

The compressed air exhausted from the high-pressure compressor 26 is directed into the combustion equipment 28 where it is mixed with fuel and the mixture combusted. The resultant hot combustion products then expand through, and thereby drive the high, intermediate, and low-pressure turbines 30, 32, 34 before being exhausted through the nozzle 36 to provide additional propulsive thrust. The high, intermediate, and low-pressure turbines 30, 32, 34 drive respectively the high-pressure compressor 26, intermediate pressure compressor 24 and fan 22, each by a suitable interconnecting shaft.

Other gas turbine engines to which the present disclosure may be applied may have alternative configurations. By way of example, such gas turbine engines may have an alternative number of interconnecting shafts (two, for example) and/or an alternative number of compressors and/or turbines. Further, such gas turbine engines may comprise a gearbox provided in the drive train from a turbine to a compressor and/or fan.

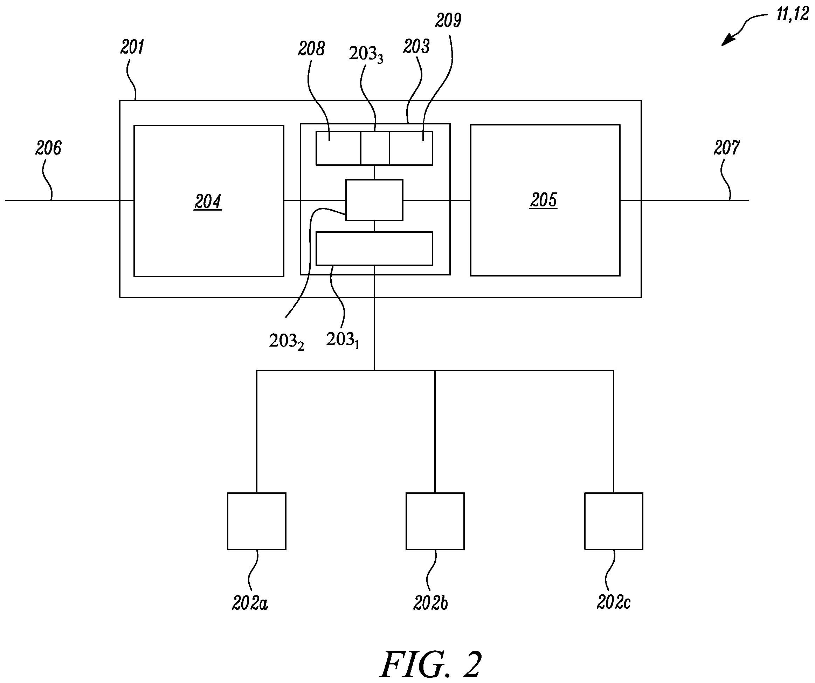

The first EHM system 11 is permanently installed on the engine 10, while the second EHM system 12 may be a temporary installation. A temporary installation may have fewer electrical and/or mechanical connections to the engine than a permanent installation and may consequently take less time to install and remove. In the example illustrated in Figure 1, the first EHM system 11 is mounted to the low-pressure compressor casing 40. The second EHM system 12 is installed on the core casing 38. Each of the EHM systems 11, 12 comprise in general terms an EHM module 201 connected to a plurality of sensors 202a-c, as illustrated schematically in simplified form in Figure 2. Sensor data from the sensors 202a-c may for example indicate pressure, temperature and speed information, among other things, which is acquired from various parts of the engine 10. These sensor data are received by a data acquisition module 203, which acquires and stores incoming data from the sensors 202a-c. The data acquisition module 203 may comprise a sensor interface 203₁ for receiving sensor data from the plurality of sensors 202a-c, a processor or CPU 203₂ for logging and processing the received sensor data and a memory 203₃ for storing the received and time stamped sensor data 209. The memory 203₃ may comprise a non-transitory computer-readable storage medium (such as a read-only memory, flash memory, solid state drive or hard drive) that stores a computer program 208 containing instructions for the processor 203₂ to operate the data acquisition module 203 to perform the methods described herein. A power module 204 provides electrical power to the data acquisition module 203. The power module 204 may derive power from an onboard electrical power source connected to the EHM module 201 via a power supply line 206 or may itself contain an internal power source such as a battery, particularly in the case of a temporary TSK. An alternative power source for a TSK may comprise a thermoelectric generator (TEG), which can be used if there is a sufficient thermal gradient available on the engine to extract power from. An input/output (I/O) interface 205 enables the acquired data to be transmitted from the EHM module 201 and other data or control signals to be transmitted to the EHM module 201. In the case of a permanently mounted EHM system, the I/O interface may transmit and receive data and control signals via a data cable 207 to and from a central computer system onboard the aircraft.

Both the first and second EHM systems 11, 12 may be configured to transmit acquired data for offboard analysis, either on a continual basis, at intervals or when accessed for extraction of acquired data.

When using a TSK to monitor parameters that are not configured to be captured by a permanently installed EHM system, there are certification advantages in keeping the temporary fit data capture equipment physically segregated from existing and permanently fitted control systems. However, the typically large number of parameters already collected by permanently fitted units are useful for contextualising data streams captured by temporary fit units. To be useful therefore, these two sources of data need to be aligned in time, but without violating the segregation principle.

Both the permanent fit (EEC - electronic engine control) and temporary fit (TSK) systems have sensors for measuring physical environment parameters but are located in physically different locations and are of different quantities. For example, the location of the TSK may mean that direct use of shaft speed sensors is not possible. To use these sensors for synchronisation requires placing a sensor in an appropriate location and extracting information from it that is directly comparable to permanent-fit unit data, for example on an Electronic Engine Control (EEC) unit or an Engine Vibration Health Monitoring Unit (EVHMU). Feature extraction algorithms can be unreliable and sensor mounting in appropriate locations may be limited. As an illustrative example, engine speed may be extracted from vibration measured on the fan case, but this may be more difficult when in the core zones due to different vibration characteristics. In addition, such sensors can only be used once the system under test is sufficiently active, for example once sufficient rotational speed has been reached. The use of physical sensor signals for data synchronisation may therefore mean the data may be initially unsynchronised, making post-hoc alignment more difficult.

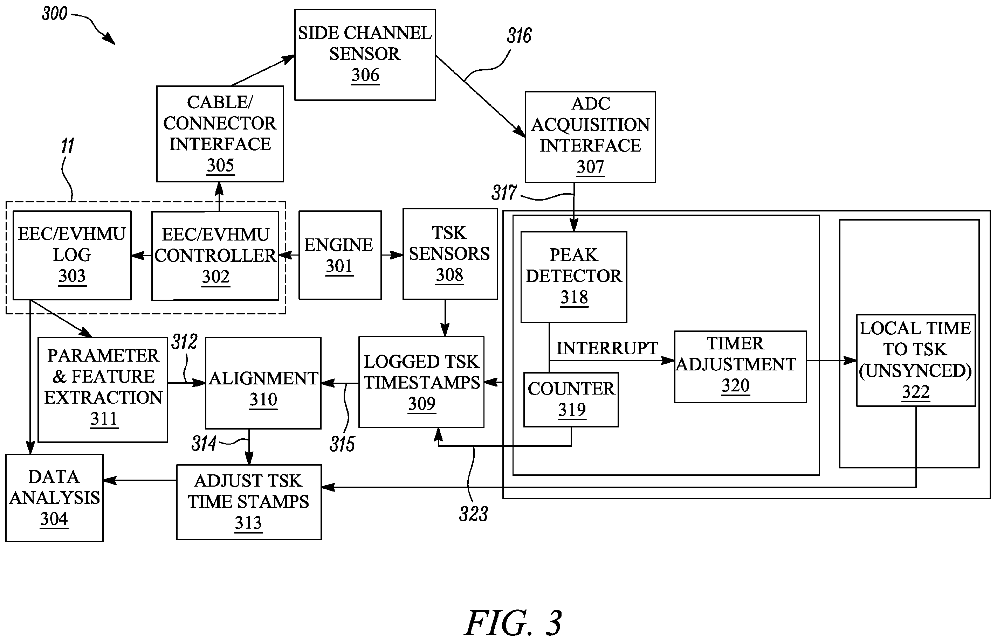

An alternative approach described herein is to directly extract timing signals and logging events via measurement of digital signals relating to a permanently installed EHM system. Figure 3 illustrates in functional block form an example system 300 for monitoring an engine, comprising an arrangement for synchronisation of data between first and second EHM systems, in which a first EHM system is permanently mounted to an engine and a second EHM system is a TSK that is temporarily mounted to the engine. The first EHM system 11 is represented by blocks 302 and 303, which receive sensor data from the engine 301. The first EHM system 11 comprises an EEC/EVHMU electronic controller 302 and an EEC/EVHMU log 303. A data analysis module 304 represents further analysis that may be done remotely from the EHM systems, for example by a ground-based remote system, while the remaining blocks in Figure 3 represent various functions and physical features relating to synchronisation of data from a second EHM system in the form of a temporary fit TSK, with blocks 310, 311 and 313 representing post-acquisition processing steps in which data is synchronised between the first and second EHM systems. The controller 302, log 303 and optionally data analysis 304 may be provided by the first EHM system or may be divided between different systems onboard the aircraft.

A non-invasive cable or connector interface 305 connected to the controller 302 of the first EHM system 11 is used to extract timing information from the controller 302 using a side channel sensor 306. This enables monitoring of a communication cable or connector (for example the cable 207 in Figure 2) emanating from permanent fit electronics for digital signals. The side channel signal is processed to extract a timing signal, for example from features related to communications events or activity, which are then logged with local TSK timestamps in block 309, which provides synchronisation signals 315. Post processing at block 310 aligns the communication events recorded by the TSK side-channel with EEC features 312 extracted at block 311 from parameters and features in the permanent fit communication log 303. TSK time stamps are aligned at block 313, for example by applying an offset and dilation or scaling factor, to match those of the permanent fit electronics. This provides knowledge of when the EEC starts (thus Δ*t*(0)), and the rate at which Δ*t*(*k*) is changing. The time offset 314, together with any time dilation estimate, is provided by the alignment block 310 to adjustment block 313, which adjusts the TSK time stamps accordingly. The adjusted TSK time stamps are sent to block 304 for data analysis, which can analyse sensor data from both first and second EHM systems with aligned time signals.

To avoid additional certification requirements, physical separation requirements apply, so the operations carried out separate from the first EHM system 11 are all non-invasive to the permanently installed EEC/EVHMU. This can be achieved through use of the side channel sensor 306. An output side channel signal 316 is provided to a data acquisition interface 307, which comprises an ADC (analogue to digital converter) to convert the side channel signal to a digital side channel data signal 317. The digital side channel data signal 317 is provided to a peak detector 318 and then to a counter 319, which outputs a counter signal 323 to apply to the logged TSK timestamps 309. The TSK may monitor the digital communication line in a low power mode in which no logging is carried out while the first EHM system 11 is not operational. The first EHM system 11 becoming operational will result in a number of messages being transmitted over the interface 305, which the second EHM system can use as a trigger to begin operation. The counter signal 323 may therefore be provided once the first EHM system 11 is operational and the second EHM system is operating in a higher power mode.

The TSK applies a timer adjustment 320 and generates a local (unsynchronised) time signal 322, which is then provided to the adjustment block 313, at which the unsynchronised time signal is synchronised with that of the first EHM system 11 prior to data analysis 304.

Side channel analysis is a technique known to evade cyber security measures and one method measures magnetic or voltage field emission of a data line that occurs when digital data transitions from low to high (or vice versa). A e-field (electrical) or h-field (magnetic probe) can be used to detect the signal, and may be placed above a screed cable, under the screening of said cable or near the connector (Figure 2). The optimal placement of the probe is dependent on the EEC/ EVHMU system and other constraints from those systems electro-magnetic compatibility (EMC) requirements. To further aid separability capacitive coupling (or similar) can be used to isolate the probe from the system. The probe can be screened, and that screening can be tied to the data line screen, thus preventing external electrical disturbances entering the system.

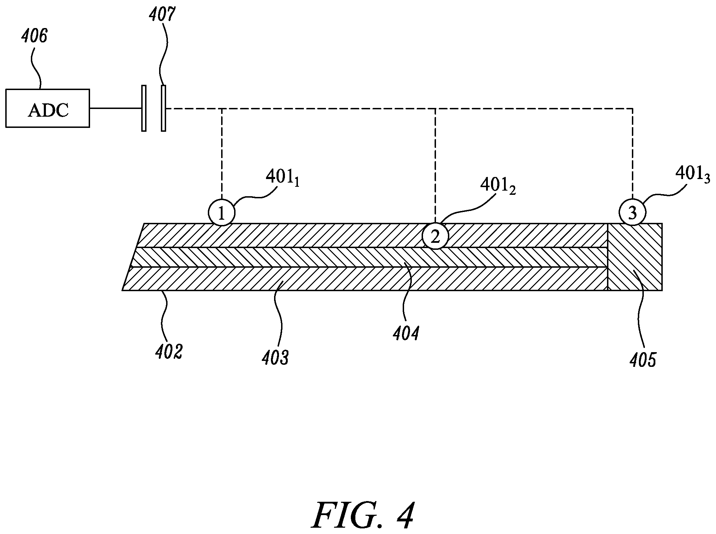

An example of a side channel sensor and acquisition interface (blocks 306 and 307 in Figure 3) connected to a cable or connector that is connected to the first EHM system is illustrated schematically in Figure 4. The side channel sensor, which may be any one of sensors 401₁₋₃, may be connected to a cable 402 around the outside of the cable 402 (position 1 in Figure 4) or through an outer screening sheath 403 of the cable 402 (position 2) for access to an internal conductor 404. The side channel sensor 401₂ may alternatively the sensor 401₃ may be mounted to a connector 405 connected to the EHM system (position 3). The cable 402 may correspond to the cable 207 described above in relation to Figure 2.

The side channel signal from the sensor 401₁₋₃ is converted to a digital signal by an ADC 406. To electrically isolate the side channel sensor 401₁₋₃, an isolation capacitor 407 may be placed in line between the ADC 406 and the sensor 401₁₋₃. The ADC 406 may also amplify the side channel signal to raise the detected signal to a measurable level.

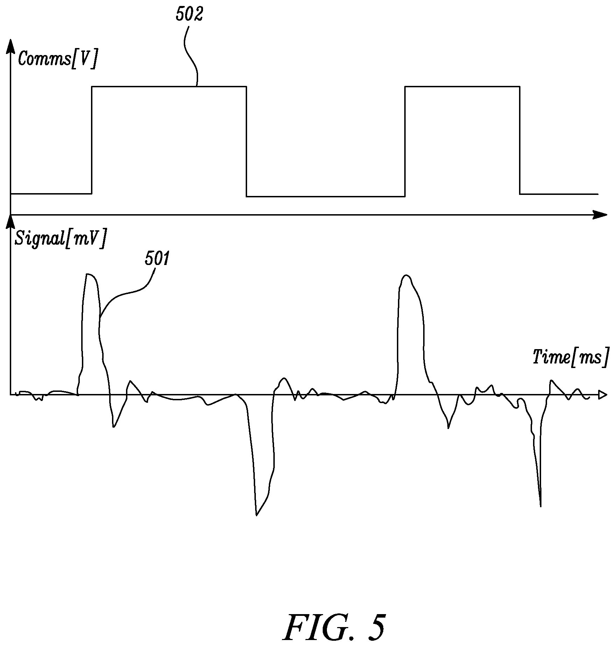

Figure 5 illustrates an example side channel signal 501, which may for example be derived from a measured magnetic or electric field measurement, on a data communication line on which a binary data stream is being transmitted. Positive and negative peaks in the side channel signal 501 correspond to respective rising and falling edges of a digital signal 502 being carried by the cable 402 (Figure 4).

Referring again to Figure 3, the peak detector 318 or an analogue comparator may be used to identify an event and trigger a hardware counter 319 or provide an interrupt in the TSK to the timing adjustment block 320. If the trigger event of the EEC does not correspond to an integer multiple of the TSK sampling time, a small adjustment can be made to the TSK clock to accelerate or decelerate execution speed. An alternative arrangement is to record the time stamps for the EEC events or periodically record the counter value for post capture alignment processing. As an example, a locally generated time signal may count in smaller time divisions (say 1 ms), while peak detector events may be driven by external synchronisation signals at a longer time period, for example 10 ms. A drift between these two signals may occur over time. The peak detector signals will be used as a reference value, requiring the locally generated signals to be aligned. If for example only 9 counts have occurred locally, the locally generated time signal may be incremented by one to match the peak detector signal. If a greater number of locally generated signals have occurred, the locally generated time signal may be decremented. This way the locally generated time signal can be kept aligned to the periodicity of signals from the first EHM system. Alternatively, the peak detector signals can be logged against the locally generated time signal and post-processing used to adjust the data to account for the measured drift.

The method and system described herein may be applicable to various types of machinery and not only gas turbine engines for aircraft applications. The restrictions on physical separation of monitoring equipment makes the method more applicable to any regulated industry with operating safety considerations, such as transport, power generation and manufacturing.

The ability to synchronise sensor data can also be shared by a secondary data port to connect parallel data acquisition units (or service panels). This capability allows the synchronisation of one unit to be shared with others, thus enabling increased sensor coverage. Fully distributed consensus algorithms acting on synchronisation signals generated from multiple or a single master unit with back-up are two architecture options. The time adjusted local time from one unit can be broadcast to other units (e.g. over a communications bus). If it is the master unit then this time may be accepted by all units. Alternatively each unit could broadcast its own time and an average could be used. The known technique of 'Consensus Averaging' may be used to achieve this with a distributed system.

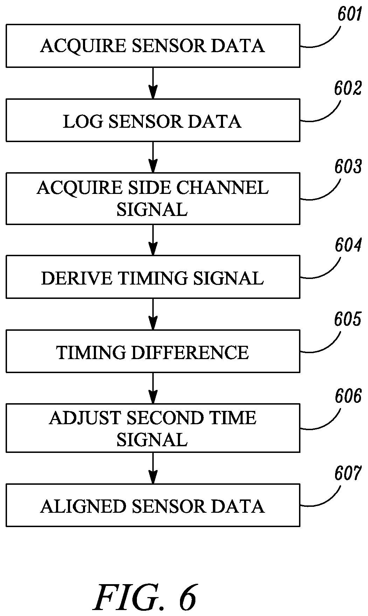

Figure 6 is a schematic flow diagram illustrating an example method of synchronising data in line with the above description. In a first step 601, sensor data is acquired from a plurality of sensors at the first and second EHM systems. Referring to Figure 3, the plurality of sensors include sensors installed on the engine 301, the TSK sensors 308 and the side channel sensor 306 connected by the cable/connector interface 305. In a second step 602, the first sensor data is logged against a first time signal from the first EHM system and the second sensor data against a second time signal from the second EHM system. In Figure 3, the first EHM system 11 the sensor data is logged by the EEC/EVHMU log 303 and the second sensor data is logged by the log data block 309. In a third step 603, a side channel signal (316 in Figure 3) is acquired from a side channel sensor (306 in Figure 3) mounted to a cable or connector (305 in Figure 3) connected to the first EHM system. In a fourth step 604, a timing signal (323 in Figure 3) is derived from the side channel signal. In a fifth step 605, a timing difference is determined between the first and second time signals from the derived timing signal, which in Figure 3 is done by the alignment block 310. In a sixth step 606, the second time signal is adjusted for the second sensor data to align in time with the first sensor data, which in Figure 3 is done by the adjustment block 313. The aligned sensor data 607 may then be provided for analysis with the first and second sensor data on a common time series, which is done by the data analysis block 304 in Figure 3.

It will be understood that the patent application is not limited to the embodiments described above and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method of synchronising sensor data from first and second engine health monitoring, EHM, systems (11, 12) installed on an engine (10), each EHM system (11, 12) having a plurality of sensors (202a-c) configured to measure parameters of the engine (10), the method comprising:
acquiring (601) first and second sensor data from the plurality of sensors (202a-c) at the first and second EHM systems (11, 12);
logging (602) the first sensor data against a first time signal from the first EHM systems and the second sensor data against a second time signal from the second EHM system;
acquiring (603) a side channel signal (316) from a side channel sensor (306) mounted to a cable or connector (305) connected to the first EHM system (11);
deriving (604) a timing signal (323) from the side channel signal (316);
determining (605) a timing difference between the first and second time signals from the derived timing signal; and
adjusting (607) the second time signal for the second sensor data to align the second sensor data in time with the first sensor data.

2. The method of claim 1, wherein the side channel sensor (401) is mounted around the cable (402) connected to the first EHM system (11).

3. The method of claim 1, wherein the side channel sensor (401) is connected to the cable through an outer sheath (404) of the cable (402) connected to the first EHM system (11).

4. The method of any preceding claim, wherein the timing signal is derived by extracting features from the side channel signal (316).

5. The method of any preceding claim, wherein the second time signal is adjusted to apply an offset to the second time signal to align the second sensor data with the first sensor data.

6. The method of any preceding claim, wherein the second time signal is adjusted to apply a time dilation to the second time signal to align the second sensor data with the first sensor data.

7. The method of any preceding claim, wherein the first and second sensor data includes one or more of pressure, temperature and engine speed data from the engine (10).

8. A system (300) for monitoring an engine, the system (300) comprising first and second engine health monitoring, EHM, systems (11, 12) installed on an engine (10), each EHM system (11, 12) having a plurality of sensors (202a-c) configured to measure parameters of the engine (10), the system configured to:
acquire first and second sensor data from the plurality of sensors (202a-c) at the first and second EHM systems (11, 12);
log the first sensor data against a first time signal from the first EHM systems and the second sensor data against a second time signal from the second EHM system;
acquire a side channel signal (316) from a side channel sensor (306, 401₁₋₃) mounted to a cable or connector (305, 402) connected to the first EHM system (11);
derive a timing signal (323) from the side channel signal (316);
determine a timing difference between the first and second time signals from the derived timing signal; and
adjust the second time signal for the second sensor data to align the second sensor data in time with the first sensor data.

9. The system (300) of claim 8, wherein the side channel sensor (306, 401₁₋₃) is mounted around the cable (305, 402) connected to the first EHM system (11).

10. The system (300) of claim 8, wherein the side channel sensor (401₂) is connected to the cable (402) through an outer sheath (404) of the cable (402) connected to the first EHM system (11).

11. The system (300) of any one of claims 8 to 10, wherein the timing signal is derived by extracting features from the side channel signal (316).

12. The system (300) of any one of claims 8 to 11, wherein the system is configured to adjust the second time signal to apply an offset to the second time signal to align the second sensor data with the first sensor data.

13. The system (300) of any one of claims 8 to 12, wherein the system is configured to adjust the second time signal to apply a time dilation to the second time signal to align the second sensor data with the first sensor data.

14. A gas turbine engine (10) comprising a system (300) for monitoring the engine (10) according to any one of claims 8 to 13.

15. A computer program comprising instructions for causing a computer-implemented system (300) for monitoring an engine (10) to perform the method according to any one of claims 1 to 7.
